# EUROPÄISCHE PATENTSCHRIFT

(11) **EP 2 182 697 B1**
(45) Veröffentlichungstag und Bekanntmachung des Hinweises auf die Patenterteilung: **23.03.2016**
(21) Anmeldenummer: 09008944.2
(22) Anmeldetag: 08.07.2009
(51) Int. Cl.: H04L 29/06, H04L 29/08, G01S 15/87, G01S 15/93, G01S 7/00

(54) **Verfahren zur Steuerung von Sensoren an einem Fahrzeug**
Method for controlling sensors on a vehicle
Procédé de commande de capteurs sur un véhicule

(30) Priorität: 30.08.2008 DE 102008045190
(43) Veröffentlichungstag der Anmeldung: 05.05.2010
(73) Patentinhaber: Valeo Schalter und Sensoren GmbH, 74321 Bietigheim-Bissingen (DE)
(72) Erfinder: Hoffsommer, Klaus, 74321 Bietigheim-Bissingen (DE)

(56) Entgegenhaltungen:
- DE-A1- 10 020 842
- DE-A1- 10 144 829
- DE-A1- 19 963 755
- DE-A1-102004 008 667
- DE-A1-102004 053 238

## Beschreibung

### Stand der Technik

Die Erfindung betrifft ein Verfahren zur Steuerung von Sensoren an einem Fahrzeug, zum Beispiel für ein ultraschallbasierendes Umfelderkennungssystem als Parkassistenz in einem Kraftfahrzeug, nach der Gattung des Hauptanspruchs.

Bei solchen ultraschallbasierenden Umfelderkennungssystemen werden mindestens ein Ultraschallsensor oder mehrere beispielsweise in der vorderen und/oder hinteren Stoßstange oder auch seitlich an einem Kraftfahrzeug verbaut. Jeder Ultraschallsensor sendet dabei ein Ultraschallsignal aus, welches von einem möglichen Objekt bzw. Hindernis reflektiert wird und von dem gleichen Ultraschallsensor und oder von weiteren Ultraschallsensoren empfangen und dann einer Signalauswertung zugeführt werden kann. Üblicherweise sind solche ultraschallbasierende Umfelderkennungssysteme mit Einzelverbindungen von einem Steuergerät zu jedem Sensor aufgebaut.

Aus der DE 101 44 829 A1 ist es aber auch bekannt, dass Ultraschallsensoren, die Bestandteil eines solchen Sensorsystems für ein Umfelderkennungssystem sind, über ein Bussystem mit einem zentralen Steuergerät in einem Fahrzeug kommunizieren. Hieraus ist ferner bekannt, dass in der Nähe der jeweiligen Sensoren, d.h. jeweils an der vorderen und an der hinteren Stoßstange dezentrale Steuereinheiten angebracht sind, die einerseits über das Bussystem mit dem zentralen Steuergerät und über Versorgungs- und Kommunikationsleitungen mit den Sensoren verbunden sind. In den dezentrale Steuereinheiten sind jeweils spezifische Daten für die im jeweiligen Bereich angeordneten Sensoren abgelegt und es werden eine Reihe von Funktionen hierausgeübt, wie zum Beispiel Kommunikation mit den Sensoren, Spannungsversorgung, der Sensoren, Senden von Abstandsintormationen von den Sensoren über das Bussystem, Lesen und Verarbeiten von Aktivieruhgsinformationen sowie das Speichern von Codierdaten der Sensoren.

Bei solchen ultraschallbasierenden Umfelderkennungssystem in Fahrzeugen kommen beispielsweise die bei Fahrzeugen schon häufig installierten Systeme mit LIN-Bus Verbindungen in Betracht Bei solchen Systemen ist die geringe Datenrate für diesen Anwendungsfall ein Nachteil, da der LIN-Bus nur bis 20kBaud spezifiziert ist, wobei die Nettodatenrate noch deutlich geringer ist. Speziell bei Systemen ist mit vielen Sensoren führt die geringe Datenrate zu Funktionseinbußen bzw. durch Aufteilung des Bussystems zu höheren Systemkosten.

In den bekannten Systemen mit Einzelverbindungen oder mit einem Bussystem bestimmt dabei das zentrale Steuergerät den Messablauf. Durch Triggerimpulse bzw. Triggerteiegramme bestimmt das Steuergerät, welcher Sensor welche Aktion durchführt. Beispiele für solche Aktionen sind: Erzeugen eines Ultraschallimpulses oder das Erfassen von eingehenden Ultraschallimpulsen. Üblicherweise definiert das System solche Triggerimpulse bzw. Triggerdaten für mehrere Sensoren synchron, um auch die Messaktionen synchron auszuführen. Eine Verzögerung zwischen Trigger und Aktion kann jedoch auch vorgesehen bzw. technisch bedingt sein.

Aus der DE 10 2004 053 238 A1 ist eine Bordnetzüberwachung für Fahrzeuge bekannt, bei dem eine Batterieserisorik über ein Bus-System mit einem Leistungsverteilungsmodut kommuniziert. Zur Reduzierung des Datenaustausches über das Bus-System umfasst die Batteriesensorik dabei eine internen Prozessor, welche den Messablaut steuert und eine Vorverarbeitung der Messdaten vornimmt.

Die DE 100 20 842 A1 betrifft ein Koordinatenmeßgerat für eine Werkzeugmaschine mit einer Steuer- und Auswerteeinrichtung sowie einem unabhängig von dieser arbeitendem Meßsensor. Meßsensor sowie Steuer- und Auswerteeinrichtung umfassen jeweils einen zugehörigen Zeitgeber, wobei die Zeitgeber unabhängig voneinander arbeiten und auf einen gemeinsamen Startzeitpunkt abgeglichen werden.

Es kann daher als eine Aufgabe der Erfindung angesehen werden, dass ein ultraschallbasierendes Umfelderkennungssystem vorzugsweise mit einem LIN-Bus so ausgebildet ist, dass es keine Funktionseinbußen gegenüber einem System mit konventioneller Datenübertragung halt.

### Darstellung der Erfindung

Die Erfindung geht von einem Verfahren zur Steuerung von Sensoren für ultraschalibasierende Umfelderkennungssysteme in einem Kraftfahrzeug, aus, bei dem die Sensoren mit einem zentralen Steuergerät über ein Bussystem kommunizieren. Erfindungsgemäß steuern die Sensoren den Messablauf mittels in den Sensoren fest hinterlegter Daten oder mittels in einer Aufdatphase während der Initialisierung des Umfelderkennungssystem jeweils hinterlegter Daten selbstständig, wobei Triggerimpulse zur Triggerung des Messablaufs mit jeweils einem eigenständigen Zeitmesser im jeweiligen Sensor erzeugt werden. Mit der Erfindung ist somit in vorteilhafter Weise erreicht, dass der Datenaustausch über das Bussystem hinsichtlich der Übertragung von Messdaten optimiert ist, da die Triggerung in den Sensoren erfolgt.

Besonders vorteilhaft ist es, wenn die Zeitmesser der jeweiligen Sensoren untereinander synchronisiert werden, wobei die Synchronisierung mittels einer Datenübertragung während der Initialisierungsphase oder mittels einer Datenübertragung während des Betriebs des Umfelderkennungssystems zu Zeiten, in denen das Umfelderkennungssystem nicht voll ausgelastet ist, vorgenommen werden kann.

Vorzugsweise kann die Synchronisierung durch eine Definition vorgegebener Telegramme als Synchronisationsereignis vorgenommen werden, wobei entweder das die Systemzeit des Sensors vollständig festlegt oder einen Feinabgleich durchführt, bei dem davon ausgegangen wird, dass die Zeitmesser in den Sensoren synchronisiert sind und lediglich Zeitabweichungen durch die Toleranz der Zeiterzeugung ausgeglichen werden müssen.

Es ist weiterhin vorteilhaft, wenn der Messablauf als Tabelle mit relativen oder bezüglich des jeweiligen Zeitmessers absoluten Zeiten und den zugehörigen Messaktionen in den jeweiligen Sensoren hinterlegt ist. Andererseits kann aber auch der Messablauf als Algorithmus zur Errechnen der nächsten Messaktion und des dazugehörigen Zeitpunktes in den jeweiligen Sensoren hinterlegt sein.

Außerdem können mehrere Messabläufe in den jeweiligen Sensoren hinterlegt werden, wobei der jeweils gültige Messablauf durch eine Statusinformation als Datum oder Adresse in einem Bustelegramm des zentralen Steuergeräts oder des jeweiligen Sensors festgelegt ist.

Ein vorteilhafte Anwendung der Erfindung ergibt sich, wenn das zuvor beschriebene Verfahren als Computerprogrammprodukt auf einem computerverwendbaren Medium gespeichert ist, umfassend computerlesbare Programmmittel, welche bei Ausführung des Computerprogrammprodukts auf einem Mikroprozessor mit zugehörigen Speichermitteln oder auf einem Computer diesen zur Durchführung des Verfahrens veranlassen.

Zusammenfassend ist festzustellen, dass bei dem erfindungsgemäßen Verfahren keine speziellen Telegramme für die Triggerung des Messablaufs der Sensoren erforderlich sind, sodass bei gleicher Datenrate mehr Messdaten über das Bussystem übertragen werden können. Ferner ist das Messtiming unabhängig z. B. vom (LIN)-Bustiming, sodass auch bei komplexem Messtimings (z. B. bei einer Variation von Messdauer und Zeitpunkten) das (LIN)-Bustiming relativ einfach bleiben kann. Das Messtiming braucht sich dabei nicht nach den Einschränkungen des (LIN)-Bustiming zu richten, z. B. hinsichtlich der zeitlichen Auflösung der (LIN)-Bus-Messablauftabelle.

Die Definitionsmöglichkeiten des Messtimings werden bei der Erfindung nicht durch die Datenübertragungstelegramme eingeschränkt, da ansonsten ein Triggertelegramm in die Lücke von Datenübertragungstelegrammen eingefügt werden muss und dadurch Pausen auftreten, die die mögliche Datenübertragungsrate verringern.

Durch die erfindungsgemäße Messung im Hintergrund können somit kontinuierlich Telegramme zur Messdatenübertragung zum zentralen Steuergerät übermittelt werden und die Datenrate wird somit optimal ausgenutzt. Außerdem muss die Datenübertragung beim Start der nächsten Messung nicht abgeschlossen sein, d.h. bei abwechselnd kurzen und langen Messungen können Messdaten der kurzen Messung noch zu Beginn des nächsten Messintervall übertragen werden.

### Kurze Beschreibung der Zeichnung

Ein Ausführungsbeispiel der Erfindung wird anhand der Figur der Zeichnung erläutert. Es zeigt:

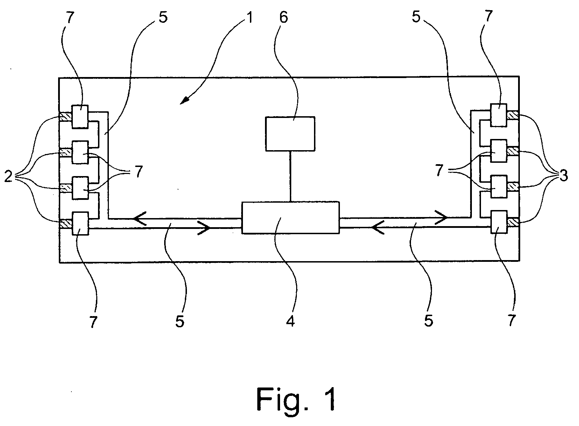

Figur 1 zeigt ein schematisches Bild eines Fahrzeugs mit Ultraschallsensoren und einem Steuergerät im Kraftfahrzeug zur Signalverarbeitung der Signale der Ultraschallsensoren.

### Weg zur Ausführung der Erfindung

Aus Figur 1 ist schematisch ein Fahrzeug 1 mit Sensoren 2 und 3, insbesondere Ultraschallsensoren für ein ultraschallbasierende Umfelderkennungssystem, im hinteren und im vorderen Bereich des Fahrzeugs 1 gezeigt. Die Sensoren 2 und 3 sind mit einem zentralen Steuergerät 4 über ein Bussystem 5, vorzugsweise ein LIN-Bus, verbunden. Außerdem sind noch Anzeigemittel 6 hier schematisch angedeutet, die die vom Umfelderkennungssystem aufbereiteten Daten optisch und/oder akustisch dem Fahrer des Fahrzeugs 1 zur Verfügung stellen.

Weiterhin sind die Sensoren 2 und 3 mit geeigneten computertechnischen Mitteln 7 ausgestattet, die den Messablauf, hier die Ultraschallabtastung des Umgebungsbereichs des Fahrzeugs 1 vorn und hinten, zum Beispiel für ein Parkassistenzsystem, mittels in den Sensoren 2 und 3 bzw. in den hier integrierten computertechnischen Mitteln 7 fest hinterlegter Daten steuern. Alternativ kann dies auch mit in einer Aufdatphase während der Initialisierung des Umfelderkennungssystems jeweils hinterlegter Daten bzw. einer Programmierung durch das Steuergerät 4 erfolgen, wobei Triggerimpulse zur Triggerung des Messablaufs mit jeweils einem eigenständigen Zeitmesser im jeweiligen Sensor 2,3 erzeugt werden. Auf die Übertragung von Triggertelegrammen zum Auslösen von Messaktionen durch das Steuergerät 4 kann hier somit verzichtet werden, da jeder Sensor 2 und 3 einen Zeitmesser (Timer) besitzt, mit dem er selbstständig die im Messablauf definierten Triggerzeitpunkte erkennt.

Die Synchronisierung der Zeitmesser in den Sensoren 2 und 3 kann wie folgt erfolgen: Durch eine Datenübertragung der Systemzeit während der Initialisierungsphase, durch eine Datenübertragung der Systemzeit zu Zeiten, in denen das System nicht voll ausgelastet ist oder durch Definition bestimmter Telegramme als Synchronisationsereignis.

Die Daten oder Adressen eines solchen Telegramms haben üblicherweise nichts mit der Timersynchronisation zu tun, aber das Auftreten des Telegramms kann als Ereignis zur Synchronisierung festgelegt werden. Der genaue Zeitpunkt kann dann der Start (bzw. "Sync.Break" für LIN-Bussysteme) oder das Ende des Telegramms sein, ein bestimmtes Byte bzw. eine Flanke darin oder der Mittelwelt über mehrere Flanken.

Dieses Synchronisationsereignis kann dann eine Systemzeit komplett neu festlegen, oder einen Feinabgleich durchführen. Beim Feinabgleich wird davon ausgegangen, dass die Zeitmesser in den Sensoren 2 und 3 schon synchronisiert sind, jedoch Abweichungen durch die Toleranz der Zeiterzeugung regelmäßig ausgeglichen werden müssen.

Der zuvor erwähnte Messablauf der Sensoren 2 und 3 kann als Daten-Tabelle oder als Algorithmus in den computertechnischen Mitteln 7 hinterlegt sein, wobei die Tabelle mit relativen bzw. bezüglich eines Timers absoluten Zeiten und den dazugehörigen Messaktionen verknüpft ist und der Algorithmus zum Errechnen der nächsten Messaktion und des dazugehörigen Zeitpunktes dient.

Für das Hinterlegen des Messablaufs in den computertechnischen Mitteln 7 gibt es folgende Möglichkeiten. Der Ablauf ist fest in den Sensoren 2 und 3 und in dem Master (Steuergerät 4) programmiert als Tabelle oder Algorithmus oder in der Initialisierungsphase programmiert der Master (Steuergerät 4) die Sensoren 2 und 3 mit dem vorgesehenen Messablauf als Tabelle, Algorithmus oder über die Parameter eines Algorithmus.

Bei einem solchen Verfahren können dabei auch mehrere Messabläufe definiert sein, um die Messung an aktuelle Situation in dem zuvor beschriebenen Umfelderkennungssystem an einem Fahrzeug 1 anzupassen. Der aktuell gültige Messablaufs wird dabei beispielsweise durch eine spezielle Statusinformation als Datum in einem LIN-Telegramm, gesendet durch den LIN-Master (Steuergerät 4) oder einen LIN-Slave (Sensor 2,3) und der Master (Steuergerät 4) wählt den Ablauf über die Verwendung bestimmter Telegramme aus, wobei die Daten selbst andere Informationen enthalten; geändert wird z. B. die Adressinformation. Informationen die über den LIN-Bus (Bussystem 5) übertragen werden bestimmen dabei den Messablauf, z. B. einen Abstand< 30cm als Messablauf für den Nahbereich und ansonsten einen Messablauf für den Fernbereich im Umfelderkennungssystem.

## Patentansprüche

1. Verfahren zur Steuerung von Sensoren (2,3) für ultraschallbasierende Umteiderkennungssysteme in einem Fahrzeug (1), bei dem die Sensoren (2,3) mit einem zentralen Steuergerät (4) über ein Bussystem (5) kommunizieren, **dadurch gekennzeichnet, dass** die Sensoren (2,3) den Messablauf mittels in den Sensoren (2,3) fest hinterlegter Daten und Adressen oder mittels in einer Aufdatphase während der Initialisierung des Umfelderkenllungssystems jeweils hinterlegter Daten und Adressen seibststandig steuern, wobei Triggerimpulse zur Triggerung des MessaMaufs mit jeweils einem eigenständigen Zeitmesser im jeweiligen Sensor (2,3) erzeugt werden.

2. Verfahren nach Anspruch 1, **dadurch gekennzeichnet, dass** die Zeitmesser der jeweiligen Sensoren (2,3) untereinander synchronisiert werden.

3. Verfahren nach Anspruch 2, **dadurch gekennzeichnet, dass** die Synchronisierung mittels einer Datenübertragung während der Initialisierungsphase vorgenommen wird.

4. Verfahren nach Anspruch 2, **dadurch gekennzeichnet, dass** die Synchronisierung mittels einer Datenübertragung während des Betriebs des Umfelderkennungssystems zu Zeiten, in denen das Umfelderkennungssystem nicht voll ausgelastet ist, vorgenommen wird.

5. Verfahren nach Anspruch 3 oder 4, **dadurch gekennzeichnet, dass** die Synchronisierung durch eine Definition vorgegebener Telegramme als Synchronisationsereignis vorgenommen wird.

6. Verfahren nach Anspruch 5, **dadurch gekennzeichnet, dass** das Synchrohisationsereignis die Systemzeit des Sensors (2,3) vollständig festlegt oder einen Feinabgleich durchführt, bei dem davon ausgegangen wird, dass die Zeitmesser in den Sensoren synchronisiert sind und lediglich Zeitabweichungen durch die Toleranz der Zeiterzeugung ausgeglichen werden.

7. Verfahren nach einem der vorhergehenden Ansprüche, **dadurch gekennzeichnet, dass** der Messablauf als Tabelle mit relativen oder bezüglich des jeweiligen Zeitmessers absoluten Zeiten und den zugehörigen Messaktionen in den jeweiligen Sensoren (2,3) hinterlegt ist.

8. Verfahren nach einem der Ansprüche 1 bis 6, **dadurch gekennzeichnet, dass** der Messablauf als Algorithmus zur Errechnen der nächsten Messaktion und des dazugehörigen Zeitpunktes in den jeweiligen Sensoren (2,3) hinterlegt ist.

9. Verfahren nach Anspruch 8 oder 9, **dadurch gekennzeichnet, dass** mehrere Messabläufe in den jeweiligen Sensoren (2,3) hinterlegt sind, wobei der jeweils gültige Messabiauf durch eine Statusinformation als Datum oder Adresse in einem Bustelegramm des zentralen Steuergeräts (4) oder des jeweiligen Sensors (2,3) ist.

10. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 9 veranlassen.

## Claims

1. Method for controlling sensors (2, 3) for ultrasound-based environment recognition systems in a vehicle (1), in which the sensors (2, 3) communicate with a central control device (4) via a bus system (5), **characterized in that** the sensors (2, 3) independently control the measurement sequence by means of data and addresses permanently stored in the sensors (2, 3) or by means of data and addresses respectively stored in an updating phase during the initialization of the environment recognition system, trigger pulses for triggering the measurement sequence being generated using an independent timer in each case in the respective sensor (2, 3).

2. Method according to Claim 1, **characterized in that** the timers in the respective sensors (2, 3) are synchronized with one another.

3. Method according to Claim 2, **characterized in that** the synchronization is carried out by transmitting data during the initialization phase.

4. Method according to Claim 2, **characterized in that** the synchronization is carried out by transmitting data during operation of the environment recognition system at times at which the environment recognition system is not fully utilized.

5. Method according to Claim 3 or 4, **characterized in that** the synchronization is carried out by defining predefined messages as a synchronization event.

6. Method according to Claim 5, **characterized in that** the synchronization event completely defines the system time of the sensor (2, 3) or carries out a fine adjustment in which it is assumed that the timers in the sensors are synchronized and only time variations are compensated for by the time generation tolerance.

7. Method according to one of the preceding claims, **characterized in that** the measurement sequence is stored in the respective sensors (2, 3) as a table containing relative times or absolute times with respect to the respective timer and the associated measuring actions.

8. Method according to one of Claims 1 to 6, **characterized in that** the measurement sequence is stored in the respective sensors (2, 3) as an algorithm for calculating the next measuring action and the associated time.

9. Method according to Claim 8 or 9, **characterized in that** a plurality of measurement sequences are stored in the respective sensors (2, 3), the respectively valid measurement sequence being by an item of status information in the form of a data item or address in a bus message from the central control device (4) or from the respective sensor (2, 3).

10. Computer program product stored on a computerusable medium, comprising computer-readable program means which, when the computer program product is executed on a microprocessor with associated storage means or on a computer, cause it to carry out a method according to one of Claims 1 to 9.

## Revendications

1. Procédé de commande de capteurs (2, 3) pour systèmes de reconnaissance de l'environnement sur la base d'ultrasons dans un véhicule (1), dans lequel les capteurs (2, 3) communiquent avec un appareil central de commande (4) par l'intermédiaire d'un système de bus (5),
**caractérisé en ce que**
les capteurs (2, 3) commandent de manière autonome le déroulement de la mesure au moyen de données et d'adresses conservées en permanence dans les capteurs (2, 3) ou au moyen de données et d'adresses placées en mémoire dans une phase de mise à jour au cours de l'initialisation du système de détection de l'environnement et
**en ce que** des impulsions de gâchette qui activent le déroulement de la mesure sont formées dans chaque capteur (2, 3) au moyen d'un dispositif respectif et autonome de mesure de temps.

2. Procédé selon la revendication 1, **caractérisé en ce que** les dispositifs de mesure de temps de chaque capteur (2, 3) sont synchronisés les uns par rapport aux autres.

3. Procédé selon la revendication 2, **caractérisé en ce que** la synchronisation est réalisée au moyen d'un transfert de données pendant la phase d'initialisation.

4. Procédé selon la revendication 2, **caractérisé en ce que** la synchronisation est réalisée au moyen d'un transfert de données pendant le fonctionnement du système de reconnaissance de l'environnement, à des instants auxquels le système de reconnaissance de l'environnement n'est pas totalement sollicité.

5. Procédé selon les revendications 3 ou 4, **caractérisé en ce que** la synchronisation est réalisée par une définition de télégrammes prédéterminés servant d'événements de synchronisation.

6. Procédé selon la revendication 5, **caractérisé en ce que** l'événement de synchronisation définit complètement le temps système du capteur (2, 3) ou exécute un équilibrage fin sur la base de l'hypothèse que les dispositifs de mesure de temps prévus dans les capteurs sont synchronisés et que seuls des écarts temporels provoqués par les tolérances de formation du temps doivent être compensés.

7. Procédé selon l'une des revendications précédentes, **caractérisé en ce que** le déroulement de la mesure est conservé en mémoire sous la forme de tableaux présentant les temps relatifs ou les temps absolus de chaque dispositif de mesure de temps et les actions de mesure exécutées dans chacun des capteurs (2, 3).

8. Procédé selon l'une des revendications 1 à 6, **caractérisé en ce que** le déroulement de la mesure est conservé en mémoire en tant qu'algorithme de calcul de l'action de mesure suivante et de l'instant associé dans chaque capteur (2, 3).

9. Procédé selon les revendications 8 ou 9, **caractérisé en ce que** plusieurs déroulements de mesure sont conservés en mémoire dans chaque capteur (2, 3), le déroulement de mesure valide étant par une information de statut en tant que donnée ou adresse dans un télégramme de bus de l'appareil central de commande (4) ou de chaque capteur (2, 3).

10. Produit de programme informatique conservé en mémoire sur un support par ordinateur, comprenant des moyens de programme lisibles par ordinateur et qui permettent à ce dernier de mettre en oeuvre un procédé selon l'une des revendications 1 à 9 lorsque le produit de programme informatique est exécuté sur un microprocesseur doté de moyens de mémoire ou sur un ordinateur.
